(19) Europäisches Patentamt
European Patent Office
Office européen des brevets

(11) EP 3 778 981 A1

(12) EUROPEAN PATENT APPLICATION
published in accordance with Art. 153(4) EPC

(43) Date of publication:
17.02.2021 Bulletin 2021/07

(51) Int Cl.:
C23C 4/10 (2016.01)     C23C 4/129 (2016.01)
C23C 4/134 (2016.01)

(21) Application number: 19776091.1

(22) Date of filing: 22.03.2019

(86) International application number:
PCT/JP2019/012040

(87) International publication number:
WO 2019/188763 (03.10.2019 Gazette 2019/40)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 30.03.2018 JP 2018068685

(71) Applicant: Fujimi Incorporated
Kiyosu-shi, Aichi 452-8502 (JP)

(72) Inventors:
• ISAYAMA, Takuya
Kiyosu-shi, Aichi 452-8502 (JP)
• MASUDA, Takaya
Kiyosu-shi, Aichi 452-8502 (JP)

(74) Representative: Grünecker Patent- und Rechtsanwälte
PartG mbB
Leopoldstraße 4
80802 München (DE)

(54) SLURRY FOR SPRAYING

(57) Provided is a slurry for thermal spraying, having excellent dispersion stability of thermal spray particles. The present invention provides a slurry for thermal spraying, including: thermal spray particles made of an inorganic material; and a dispersion medium. In the slurry for thermal spraying, a ratio of a shear viscosity at a rotation speed of 10/s to a shear viscosity at a rotation speed of 1000/s is 5 or less.

FIG.1

EP 3 778 981 A1

## Description

### Technical Field

The present invention relates to a slurry for thermal spraying, including thermal spray particles.

This application claims priority based on Japanese Patent Application No. 2018-068685 filed on 30 March 2018, the entire contents of which are incorporated herein by reference.

### Background Art

A technique of imparting new functionality by coating the surface of a base material with various materials has been used in a variety of fields. For example, a thermal spraying method in which thermal spray particles made of a material such as ceramics, cermet and metal are sprayed on the surface of a base material in a state of being softened of melted by combustion or electric energy to form a thermal spray coating film composed of these materials is known as one such surface coating techniques. In this thermal spraying method, thermal spray particles, which are the coating material, are usually supplied in the form of powder to a thermal spraying device. In recent years, the supply to the thermal spraying device has been performed in the form of a slurry (inclusive of suspension liquid, suspension, etc.) in which thermal spray particles are dispersed in a dispersion medium. The conventional technique related to such slurry for thermal spraying is described in, for example, Patent Literature 1.

Citation List

Patent Literature

Patent Literature 1: WO 2014/142017

### Summary of Invention

Technical Problem

A potential problem associated with slurries for thermal spraying is that the thermal spray particles settle and form a precipitate. Since the precipitated thermal spray particles lose their fluidity and cannot be supplied to a thermal spraying device, the slurry for thermal spraying in which precipitation is likely to occur is not suitable as a material for thermal spraying. Accordingly, Patent Literature 1 discloses a configuration that facilitates suitable redispersion of precipitated thermal spray particles in a dispersion medium even if precipitation can occur in the slurry for thermal spraying. However, considering the time and effort for redispersion, it is desired to realize a slurry for thermal spraying in which sedimentation of the thermal spray particles is essentially unlikely to occur.

The present invention was created in view of such circumstances, and an object of thereof is to provide a slurry for thermal spraying having improved dispersion stability of thermal spray particles.

Solution to Problem

The inventors of the present invention have conducted extensive studies to realize a slurry for thermal spraying having high dispersion stability of thermal spray particles that are dispersoids, and have found that where thermal spray particles are used after being subjected to a certain treatment, a viscoelastic behavior is remarkably changed as compared with the case of using thermal spray particles that have not been subjected to such treatment, and a flow characteristic close to a Newtonian fluid can be exhibited despite of a powder dispersion system. This finding led to the completion of the present invention. That is, the art disclosed herein provides a slurry for thermal spraying, including: thermal spray particles made of an inorganic material; and a dispersion medium. This slurry for thermal spraying is characterized by having a ratio of a shear viscosity at a rotation speed of 10/s to a shear viscosity at a rotation speed of 1000/s of 5 or less.

In the slurry for thermal spraying realized to have such a feature, the sedimentation of the thermal spray particles is suppressed and the dispersion stability is significantly improved. The present inventors believe that such remarkable dispersion stability of the thermal spray particles is realized by, for example, adequate stabilization of the surface state of the thermal spray particles. For example, the dispersion stability is considered to be realized by the action and effect of a surface modification treatment in which a hydrophilic group such as a hydroxy group is introduced to the surface of the thermal spray particles to stabilize the surface state. Such surface modification treatment is completely different from the surface protection treatment of the thermal spray particles with a compound such as a dispersant. Although changes in the surface properties of the thermal spray particles caused by the surface modification treatment have been variously analyzed, the details thereof have not been clarified. However, for example, as a result of surface modification of the thermal spray particles, the shear viscosity ratio of the slurry for thermal spraying is suppressed to a remarkably low level as described above. A slurry for thermal spraying that has such a property while being a dispersion system can be a completely new one which has not been known so far.

In the present description, the shear viscosity of the slurry for thermal spraying is a viscosity (dynamic viscosity) specified in JIS Z 8803:2011. The shear viscosity can be measured using, for example, a rheometer, a rotational viscometer, etc., as shown in Examples described hereinbelow.

In a preferred embodiment of the slurry for thermal spraying disclosed herein, the slurry further includes a dispersant. Such a feature is preferable because the dispersion stability of the thermal spray particles in the slurry can be further improved.

In a preferred embodiment of the slurry for thermal spraying disclosed herein, the shear viscosity of the slurry for thermal spraying at a rotation speed of 10/s is 15 mPa·s or less. As a result of such a feature, the slurry for thermal spraying can have a low shear viscosity over a wide range of rotation speeds.

In a preferred embodiment of the slurry for thermal spraying disclosed herein, the dispersion medium includes at least a lower alcohol having 5 or fewer carbon atoms. Such a feature is preferable because the dispersion stability of the thermal spray particles in the slurry can be further improved.

In a preferred embodiment of the slurry for thermal spraying disclosed herein, a sedimentation degree of the slurry for thermal spraying in 3 minutes is 5% or less. The art disclosed herein is preferable because a slurry for thermal spraying that achieves such a low sedimentation degree in a stationary state is provided.

In a preferred embodiment of the slurry for thermal spraying disclosed herein, where a mass of the thermal spray particles contained in 800 mL of the slurry for thermal spraying is denoted by A (kg), and a mass of the thermal spray particles contained in a recovered slurry which is obtained by supplying 800 mL of the slurry for thermal spraying in which the thermal spray particles are in a dispersed state at a flow velocity of 35 mL/min into a horizontally arranged tube having an inner diameter of 5 mm and a length of 5 m, and recovering the slurry, is denoted by B (kg), a suppliability index, which is calculated by a following formula: suppliability index (%) = B/A × 100, is 70% or more. The art disclosed herein is preferable because a slurry for thermal spraying that has high suppliability even in a fluidized state can be provided.

### Brief Description of Drawings

[Fig. 1]

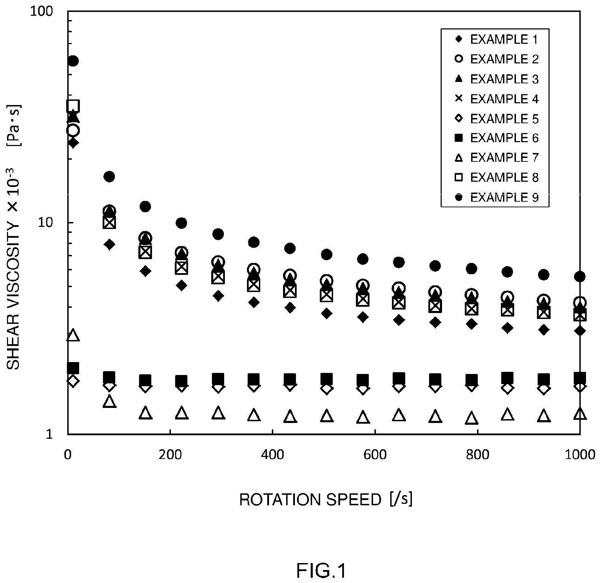

Fig. 1 is a graph showing the results of measuring the shear viscosity of the slurry for thermal spraying of each example.
[Fig. 2]

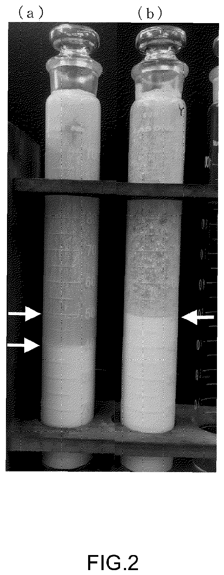

Fig. 2 is an observed image illustrating a sedimentation test of the slurry for thermal spraying of (a) Example 4 and (b) Example 7.

### Description of Embodiments

Preferred embodiments of the present invention will be described hereinbelow. It should be noted that matters other than matters particularly referred to in the present description and matters necessary for carrying out the present invention can be understood by a person skilled in the art on the basis of the teaching for carrying out the invention described in the present description and common technical knowledge. The present invention can be carried out based on the contents disclosed in the present description and common technical knowledge in the field. In the present description, "X to Y" indicating a numerical range means "X or more and Y or less".

[Slurry for Thermal Spraying]

A slurry for thermal spraying disclosed herein essentially includes: thermal spray particles made of an inorganic material; and a dispersion medium. This slurry for thermal spraying is characterized in that the ratio of the shear viscosity at a rotation speed of 10/s to the shear viscosity at a rotation speed of 1000/s is 5 or less. In other words, in the slurry for thermal spraying disclosed herein, even if the rotation speed is reduced from 1000/s to 10/s, the increase in shear viscosity is suppressed to an extremely low level.

Generally, in a dispersion system such as a paste, as shown in a plot on a high-viscosity side in the shear viscosity - rotation speed graph of Fig. 1, the viscosity value tends to rapidly increase as the rotation speed decreases. Therefore, it can be said that the slurry for thermal spraying disclosed herein is characterized in being capable of having a viscosity characteristic similar to that of a Newtonian fluid such as water despite being a powder dispersion system. Where the shear viscosity ratio is 5 or less, it can be determined that the ratio is sufficiently small. This shear viscosity ratio may be, for example, 4 or less, preferably 3 or less, particularly preferably 2.5 or less, and for example, 2 or less.

Further, in the slurry for thermal spraying disclosed herein, the shear viscosity itself is suppressed to a relatively low level as compared with a slurry for thermal spraying in which the abovementioned shear viscosity ratio is not realized. Since the viscosity of the slurry for thermal spraying depends greatly on the morphology and amount (solid content concentration) of the thermal spray particles that are dispersoids, although it cannot be stated unequivocally, for example, the viscosity at 1000/s may be 2/3 or less, 1/2 or less, 1/3 or less, and for example, 1/4 or less that of a slurry for thermal spraying in which the abovementioned shear viscosity ratio is not realized. As an example, the viscosity at 1000/s may be 3 mPa·s or less and 2 mPa·s or less. The viscosity at 10/s of the slurry for thermal spraying is, for example, 1/5 or less, 1/8 or less, 1/10 or less, and for example, 1/20 or less that of a slurry for thermal spraying in which the abovementioned shear viscosity ratio is not realized. As an example, the viscosity at 10/s may be 15 mPa·s or less, 10 mPa·s or less, and further 5 mPa·s or less or 3 mPa·s or less.

The configuration of such a slurry for thermal spraying will be described below.

(Particles for Thermal Spraying)

The thermal spray particles may include particles made of an inorganic material without particular limitation.

Here, the inorganic material is not particularly limited. As preferable examples thereof, for example, oxide-based ceramics composed of oxides of various metals, and also carbide-based ceramics composed of metal carbides, nitride-based ceramics composed of metal nitrides, and other non-oxide-based ceramics composed of non-oxides such as metal borides, fluorides, hydroxides, carbonates, phosphate, etc. can be considered.

Here, the oxide-based ceramics are not particularly limited, and oxides of various metals can be used. Examples of the metal element constituting the oxide-based ceramics include one or two or more that can be selected from semi-metal elements such as boron (B), silicon (Si), germanium (Ge), antimony (Sb), bismuth (Bi), etc., typical metal elements such as sodium (Na), magnesium (Mg), calcium (Ca), strontium (Sr), barium (Ba), zinc (Zn), aluminum (Al), gallium (Ga), indium (In), tin (Sn), lead (Pb), phosphorus (P), etc., transition metal elements such as scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), iron (Fe), cobalt (Co), nickel (Ni), copper (Cu), silver (Ag), gold (Au), etc., and lanthanoid elements such as lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tu), ytterbium (Yb), lutetium (Lu), etc. Among them, one or two or more elements selected from Mg, Y, Ti, Zr, Cr, Mn, Fe, Zn, Al, and Er are preferable. The oxide-based ceramics disclosed herein preferably include a halogen element such as fluorine (F), chlorine (Cl), bromine (Br), iodine (I), etc. in addition to the metal elements.

Specific examples of the oxide-based ceramics include alumina, zirconia, yttria, chromia, titania, cobaltite, magnesia, silica, calcia, ceria, ferrites, spinel, zircon, forsterite, steatite, cordierite, mullite, nickel oxide, silver oxide, copper oxide, zinc oxide, gallium oxide, strontium oxide, scandium oxide, samarium oxide, bismuth oxide, lanthanum oxide, lutetium oxide, hafnium oxide, vanadium oxide, niobium oxide, tungsten oxide, manganese oxide, tantalum oxide, terpium oxide, europium oxide, neodymium oxide, tin oxide, antimony oxide, antimony-containing tin oxide, indium oxide, barium titanate, lead titanate, lead zirconate titanate, Mn-Zn ferrite, Ni-Zn ferrite, sialon, tin-containing indium oxide, zirconium oxide aluminate, zirconium oxide silicate, hafnium oxide aluminate, hafnium oxide silicate, titanium oxide silicate, lanthanum oxide silicate, lanthanum oxide aluminate, yttrium oxide silicate, titanium oxide silicate, tantalum oxide silicate, yttrium oxyfluoride, yttrium oxychloride, yttrium oxybromide, yttrium oxyiodide, etc.

Examples of non-oxide-based ceramics include carbide-based ceramics such as tungsten carbide, chromium carbide, niobium carbide, vanadium carbide, tantalum carbide, titanium carbide, zirconium carbide, hafnium carbide, silicon carbide, boron carbide, etc., nitride-based ceramics such as silicon nitride, aluminum nitride, etc., boride-based ceramics such as hafnium boride, zirconium boride, tantalum boride, titanium boride, etc., hydroxide-based ceramics such as hydroxyapatites, etc., phosphate-based ceramics such as calcium phosphate, etc., and the like.

Other inorganic compounds are not particularly limited, and for example, semiconductors such as silicon, and particles (which may be powders) of various inorganic compounds such as carbides, nitrides, and borides can be considered. These inorganic compounds may be crystalline or non-crystalline. For example, halides of rare earth elements can be mentioned as particularly preferable inorganic compounds.

In the rare earth element halides, the rare earth element (RE) is not particularly limited, and can be appropriately selected from scandium, yttrium and lanthanoid elements. Specifically, one or combination of two or more of scandium (Sc), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb) and lutetium (Lu), can be considered. From the viewpoint of improving plasma erosion resistance and reducing cost, Y, La, Gd, Tb, Eu, Yb, Dy, Ce, etc. are preferable. The rare earth element may include any one of these alone or in combination of two or more.

The halogen element (X) is also not particularly limited, and may be any element belonging to Group 17 of the periodic table of the elements. Specifically, any one of halogen elements such as fluorine (F), chlorine (Cl), bromine (Br), iodine (I), astatine (At), etc. may be used alone or in combination of two or more. Preferably, it can be F, Cl, and Br. The halogen element may include any one of these alone or in combination of two or more. Suitable examples of such rare earth element halides include various rare earth element fluorides represented by yttrium fluoride ($YF_3$).

The materials forming the thermal spray particles may be used alone, or two or more kinds may be mixed or used as a composite. For example, an element other than those exemplified above may be introduced in the above-mentioned materials for the purpose of enhancing functionality or the like. Further, in addition to the above-mentioned ceramics and inorganic compounds, the material may be in the form of a cermet to which a metal is added. Furthermore, it is preferable that the thermal spray particles be melt-pulverized powder prepared by a melt-pulverization method, because the effect of improving the dispersion stability can be prominently exhibited.

The thermal spray particles are not particularly limited as long as the average particle diameter is about 30 $\mu$m or less, and the lower limit of the average particle diameter is not particularly limited. Here, it is preferable that thermal spray particles having a relatively small average particle size be used for the slurry for thermal spraying disclosed herein, because the effect of improving the suppliability becomes clear. From this viewpoint, the average particle size of the thermal spray particles can be, for example, 10 $\mu$m or less, preferably 8 $\mu$m or less, and more preferably 6 $\mu$m or less, for example 5 $\mu$m or less. In consideration of the viscosity and fluidity of the slurry for thermal spraying, the lower limit of the average particle diameter can be set to, for example, 0.01 $\mu$m or more, preferably 0.05 $\mu$m or more, and more preferably 0.1 $\mu$m or more, for example 0.5 $\mu$m or more. It is preferable to set the average particle diameter to about 1 $\mu$m or more because the viscosity of the slurry for thermal spraying can be suitably prevented from excessively increasing.

Usually, when fine thermal spray particles having an average particle diameter of about 10 $\mu$m or less are used as the thermal spray material, the fluidity of the thermal spray particles may decrease as the specific surface area increases. As a result, suppliability of the thermal spray material to the thermal spraying device is degraded, and it may be difficult to supply the thermal spray material to the thermal spraying device due to adhesion to the supply path or the like, and the film forming ability may be deteriorated. Furthermore, because of a small mass, such a thermal spray material is repelled by thermal spray flame or jet stream and cannot be suitably propelled. Meanwhile, in the slurry for thermal spraying disclosed herein, even with thermal spray particles having an average particle diameter of, for example, 10 $\mu$m or less, since the slurry for thermal spraying is prepared in consideration of suppliability to a thermal spraying device, adhesion to the supply path, etc. is suppressed, and high film forming ability can be maintained. In addition, since the thermal spray material is supplied to the flame or jet stream in the state of slurry, the thermal spray material can be carried without being repelled by the flame or jet, and since the dispersion medium is removed during flight, it is possible to form a thermally sprayed film while maintaining even higher thermal spray efficiency.

With respect to powders having an average particle size of about 1 $\mu$m or more, the average particle diameter in the present description means a particle diameter ($D_{50}$ particle diameter) corresponding to cumulative 50% in a volume-based particle size distribution measured by a laser diffraction/light scattering method. In addition, the $D_{97}$ particle diameter described hereinbelow means a particle diameter corresponding to cumulative 97% in the same particle size distribution.

Also, for powders having an average particle size of approximately 1 $\mu$m or less, the average particle size based on a dynamic light scattering (DLS) method can be adopted. The average particle diameter based on the DLS method can be measured according to JIS Z 8828:2013.

The abovementioned thermal spray particles are preferably subjected to a surface modification treatment in advance before the preparation (mixing with a dispersion medium) of the slurry for thermal spraying. As such a surface treatment, for example, a treatment of introducing an arbitrary functional group (typically, a hydrophilic functional group such as a hydroxy group) onto the surface of the thermal spray particles can be considered. A method of surface treatment is not particularly limited, and examples thereof include acid treatment, alkali treatment, plasma irradiation treatment, corona discharge treatment, flame (thermal ionization) treatment, electron beam irradiation treatment, ultraviolet irradiation treatment, subcritical water treatment, supercritical water treatment, etc. Although the details are not clear, such treatment makes it possible to maintain the dispersibility of the thermal spray particles in the slurry for thermal spraying at a high level and stably for a long period of time. Also, the viscosity itself of the slurry for thermal spraying can be reduced.

(Dispersion Medium)

The slurry for thermal spraying disclosed herein may include an aqueous dispersion medium or a non-aqueous dispersion medium.

The aqueous dispersion medium may be water or a mixture of water and a water-soluble organic solvent (mixed aqueous solution). As water, tap water, ion-exchanged water (deionized water), distilled water, pure water, or the like can be used. As the organic solvent that together with water constitutes the mixed aqueous solution, one or two or more organic solvents that can be mixed homogeneously with water (for example, lower alcohols, lower ketones, etc.) can be selected and used as appropriate.

In the art disclosed herein, the "lower alcohol" is a saturated or unsaturated alcohol having 1 to 5 carbon atoms and having a straight chain or a branched chain. Specifically, examples of the lower alcohols include monohydric alcohols such as methanol, ethanol, 1-propanol (n-propyl alcohol), 2-propanol (isopropyl alcohol), 1-butanol (n-butyl alcohol), 2-butanol (sec-butyl alcohol), tert-butyl alcohol, isobutyl alcohol (2-methylpropyl alcohol), 1-pentanol (n-pentyl alcohol), 2-pentanol (sec-amyl alcohol), 3-pentanol, 2-methyl-1-butanol, 3-methyl-1-butanol (isoamyl alcohol), 2-methyl-2-butanol (tert-amyl alcohol), 3-methyl-2-butanol, 2,2-dimethyl-1-propanol (neopentyl alcohol), etc., dihydric alcohols such as ethylene glycol, propylene glycol, etc., and polyhydric alcohols such as glycerin. Among them, monohydric saturated alcohols such as methanol, ethanol, n-propanol, i-propanol, n-butanol, i-butanol, sec-butanol, various kinds of pentanol, etc. are preferred, and straight chain saturated alcohols are more preferred as the lower alcohols referred to in the present invention. These may be used alone or in combination of two or more. However, in consideration of handleability, etc., it is preferable to use any one of the lower alcohols.

Further, in the art disclosed herein, the "lower ketone" is a ketone having 1 to 5 carbon atoms, and examples thereof include acetone, butanone, 2-pentanone, 3-pentanone, 2-hexanone, 3-hexanone, methyl ethyl ketone, methyl isobutyl ketone, etc.

It is preferable that a mixed aqueous solvent with an amount of water of 0.5% by mass to 90% by mass, preferably 1% by mass to 80% by mass, more preferably 2% by mass to 50% by mass, for example, 2% by mass to 20% by mass of the aqueous solvent be used as the aqueous solvent.

A non-aqueous solvent typically includes an organic solvent containing no water. The organic solvent is not particularly limited, and for example, the above organic solvents such as alcohols, toluene, hexane, kerosene, etc. can be used alone or in combination of two or more.

The type and composition of the dispersion medium used can be appropriately selected, for example, according to the thermal spraying method of the slurry for thermal spraying. That is, for example, when the slurry for thermal spraying is thermally sprayed by a high-velocity flame spraying method, either an aqueous solvent or a non-aqueous solvent may be used. The use of an aqueous dispersion medium is advantageous in that the surface roughness of the obtained thermal spray coating film is improved (smoothness is improved) as compared with the case of using a non-aqueous dispersion medium. The use of a non-aqueous dispersion medium is advantageous in that the porosity of the obtained thermal spray coating film is reduced as compared with the case where an aqueous dispersion medium is used.

The slurry for thermal spraying can be prepared by mixing and dispersing thermal spray particles in the above-mentioned dispersion medium. For such dispersion, for example, a homogenizer, a mixer such as a blade-type stirrer, or a disperser can be used.

(Dispersant)

The slurry for thermal spraying disclosed herein may further include, if necessary, a dispersant which is not an essential component. Here, the dispersant generally refers to a compound that can improve the dispersion stability of the thermal spray particles in the dispersion medium in the slurry for thermal spraying. Such a dispersant may be, for example, essentially a compound that acts on the thermal spray particles or a compound that acts on the dispersion medium. Further, for example, it may be a compound that improves the wettability of the surface of the thermal spray particles by the action on the thermal spray particles or the dispersion medium, or may be a compound that causes the thermal spray particles to disintegrate. It may be a compound that suppresses or inhibits the reaggregation of the thermal spray particles.

The dispersant can be selected, as appropriate, for use from aqueous dispersants and non-aqueous dispersants depending on the abovementioned dispersion medium. The dispersant may be a polymer type dispersant (inclusive of a polymer surfactant type dispersant), a surfactant type dispersant (also referred to as a low-molecular type dispersant), or an inorganic dispersant. The dispersant may also be anionic, cationic or nonionic. That is, the dispersant may have at least one functional group selected from the group consisting of an anionic group, a cationic group and a nonionic group in the molecular structure.

Examples of the polymer type dispersant include, as an aqueous dispersant, dispersants composed of polycarboxylic acid-based compounds such as polycarboxylic acid sodium salts, polycarboxylic acid ammonium salts, polycarboxylic acid-based polymers, etc., dispersants composed of a sulfonic acid-based compounds such as sodium polystyrene sulfonate, ammonium polystyrene sulfonate, sodium polyisoprene sulfonate, ammonium polyisoprene sulfonate, sodium naphthalenesulfonate, ammonium naphthalenesulfonate, sodium salt of naphthalene sulfonic acid formalin condensate, ammonium salt of naphthalene sulfonic acid formalin condensate, and the like, dispersants composed of polyethylene glycol compounds, etc. Further, examples of non-aqueous dispersants include dispersants composed of acrylic compounds such as polyacrylates, polymethacrylates, polyacrylamide, polymethacrylamide, etc., dispersants composed of polycarboxylic acid partial alkyl ester compounds having an alkyl ester bond in a part of a polycarboxylic acid, dispersants composed of polyalkyl ether compounds such as polyoxyalkylene alkyl ethers obtained by addition polymerization of ethylene oxide with an aliphatic higher alcohol, dispersants composed of polyalkylene polyamine compounds, etc.

As is clear from this description, for example, the concept of "polycarboxylic acid-based compound" in the present detailed description is inclusive of the polycarboxylic acid-based compounds and salts thereof. The same applies to other compounds.

Further, for the sake of convenience, even if a compound is classified as either an aqueous dispersant or a non-aqueous dispersant, the compound can be used as the other non-aqueous dispersant or aqueous dispersant depending on the detailed chemical structure and usage form thereof.

Examples of the surfactant type dispersant (also referred to as a low-molecular type dispersant) include, as aqueous dispersants, dispersants composed of alkylsulfonic acid-based compounds, dispersants composed of quaternary ammonium compounds, dispersants composed of alkylene oxide compounds, etc. Further, examples of the non-aqueous dispersants include dispersants composed of polyhydric alcohol ester compounds, dispersants composed of alkyl polyamine compounds, dispersants composed of imidazoline compounds such as alkyl imidazolines, etc., and the like.

Examples of the inorganic dispersants include, as aqueous dispersants, phosphates such as orthophosphates, metaphosphates, polyphosphates, pyrophosphates, tripolyphosphates, hexametaphosphates, organophosphoric acid salts, etc., iron salts such as ferric sulfate, ferrous sulfate, ferric chloride, ferrous chloride, etc., aluminum salts such as aluminum sulfate, polyaluminum chloride, sodium aluminate, etc., calcium salts such as calcium sulfate, calcium hydroxide, calcium secondary phosphate, etc., and the like.

The above dispersants may be used alone or in combination of two or more. In the art disclosed herein, as a specific example, it is a preferable embodiment to use an alkylimidazoline compound-based dispersant and a polyacrylic acid compound-based dispersant in combination. The amount of the dispersant is not necessarily limited because it depends on properties such as the average particle diameter, surface morphology, etc. of the thermal spray particles, and typically may be set within a range of 0.01% by mass to 10% by mass, for example, 1% by mass to 8% by mass, when the mass of the thermal spray particles is 100% by mass.

(Other Optional Ingredients)

The slurry for thermal spraying may further include additives such as a viscosity modifier, a flocculant (also referred to as re-dispersibility improving agent, anti-caking agent, etc.), an antifoaming agent, a preservative, an antifungal agent, an antifreezing agent, etc., which are well known, as long as the properties of the slurry disclosed herein are not impaired. When the abovementioned additives such as a flocculant, a viscosity modifier, an antifoaming agent, a preservative, an antifungal agent, etc. are used, any one of them may be used alone or two or more of them may be used in combination. The total amount of these additives is preferably in the range of 0.01% by mass to 10% by mass when the mass of the thermal spray particles is 100% by mass. In the case of using these additives as optional components, when the slurry for thermal spraying is prepared, these additives may be added to the dispersion medium at the same timing as the thermal spray particles, or at another arbitrary timing. The compounds serving as the various additives exemplified above may exhibit functions of other additives in addition to the action of the main application as the additive. In other words, for example, even compounds of the same type or composition may exhibit the action as two or more different additives.

The ratio of the thermal spray particles in the slurry for thermal spraying is not particularly limited. The ratio of the thermal spray particles to the entire slurry for thermal spraying is preferably, for example, 5% by mass or more, more preferably 10% by mass or more, and for example, 15% by mass or more. It is preferable to increase the solid fraction concentration because the thickness of the thermal spray coating film produced per unit time from the slurry for thermal spraying, that is, the thermal spray efficiency, can be increased.

The ratio of the thermal spray particles in the slurry for thermal spraying can be, for example, 70% by mass or less, preferably 65% by mass or less, and for example, 50% by mass or less. By setting the solid fraction concentration to 70% by mass or less, it is possible to realize fluidity suitable for supplying the slurry for thermal spraying to a thermal spraying device.

The pH of the slurry for thermal spraying is not particularly limited, but is preferably 2 or more and 12 or less. The pH is preferably 6 or more and 8 or less from the viewpoint of handleability of the slurry for thermal spraying. Meanwhile, for example, for the purpose of adjusting the zeta potential of the thermal spray particles, the pH may be outside the range of 6 or more and 8 or less, for example, 7 or more and 11 or less, or 3 or more and 7 or less.

The pH of the slurry for thermal spraying can be adjusted by various known acids, bases or salts thereof. Specifically, organic acids such as carboxylic acids, organic phosphonic acids, organic sulfonic acids, etc., inorganic acids such as phosphoric acid, phosphorous acid, sulfuric acid, nitric acid, hydrochloric acid, boric acid, carbonic acid, etc., organic bases such as tetramethylammonium hydroxide, trimethanolamine, monoethanolamine, etc., inorganic bases such as potassium hydroxide, sodium hydroxide, ammonia, etc., or salts thereof are preferably used.

A value obtained by using a pH meter of a glass electrode type (for example, a tabletop pH meter (F-72, manufactured by Horiba, Ltd.)) and a certified pH standard solution (for example, a phthalate pH standard solution (pH: 4.005/25°C), neutral phosphate pH standard solution (pH: 6.865/25°C), carbonate pH standard solution (pH: 10.012/25°C)) and performing measurements according to JIS Z 8802:2011 can be adopted as the pH of the slurry for thermal spraying.

Further, in the slurry for thermal spraying, the dispersion stability of the thermal spray particles is improved, so that, for example, the sedimentation of the thermal spray particles in the slurry is suppressed. Therefore, for example, when a sedimentation test is performed with a sedimentation time of 3 minutes, a sedimentation degree is suppressed to 5% or less. The sedimentation degree may be, for example, 3% or less, 2% or less, or 1% or less, for example, 0% or less. The sedimentation test for measuring the sedimentation degree can be carried out, for example, based on the method shown in the following examples, according to JIS A 1204:2009.

The slurry for thermal spraying thus prepared preferably has a suppliability index, which is determined in the following (1) to (3), of 70% or more.

<Calculation of Suppliability Index>

(1) A mass of the thermal spray particles contained in 800 mL of the slurry for thermal spraying is denoted by A (kg).
(2) A mass of the thermal spray particles contained in a recovered slurry which is obtained by supplying 800 mL of the slurry for thermal spraying in which the thermal spray particles are in a dispersed state at a flow velocity of 35 mL/min into a horizontally arranged tube having an inner diameter of 5 mm and a length of 5 m, and recovering the slurry, is denoted by B (kg).
(3) Based on the above A and B, the value calculated by the following formula:

$$\text{suppliability index } (\%) = B/A \times 100$$

is taken as the suppliability index.

The suppliability index is an index that can be used to evaluate the suppliability of thermal spray particles in the slurry for thermal spraying to a thermal spray device. By defining the suppliability index for 800 mL of the slurry for thermal spraying, the suppliability for the slurry for thermal spraying which can be used under various thermal spraying conditions (for example, thermal spraying conditions of larger scale, etc.) can be evaluated more adequately. Further, by adjusting, as appropriate, the shear viscosity ratio of the slurry for thermal spraying to 5 or less, it is possible to bring the suppliability index close to a high value of 70% or more (typically 80% or more).

In the above-mentioned measurement of the suppliability index, by setting the supply rate to a flow velocity of 35 mL/min, it is possible to generate a turbulent flow in the slurry for thermal spraying transferred in the tube having the above dimensions. It is preferable to generate such a turbulent flow because the suppliability of the slurry can be evaluated in a state where the pushing force of the slurry and the dispersibility of the thermal spray particles are enhanced. The material of the tube to be used for the evaluation of the suppliability is not strictly limited, but in order to realize smooth supply conditions for the slurry for thermal spraying, for example, it is preferable to use a flexible resin tube made of polyurethane, vinyl chloride, polytetrafluoroethylene, etc. A transparent or semi-transparent tube can be used so that the state of the thermal spray particles flowing in the tube from the outside can be confirmed.

Further, in the art disclosed herein, it can be determined that the suppliability of the thermal spray particles to a thermal spray apparatus is sufficient if the suppliability index is 70% or higher. The suppliability index is preferably 75% or higher, more preferably 80% or higher, and even more preferably 85% or higher, for example, 90% or higher (ideally 100%). In the case of the slurry for thermal spraying that satisfies such a suppliability index, when the slurry is supplied to the thermal spraying device, the sedimentation of the thermal spray particles is suppressed, and more thermal spray particles can be supplied to the thermal spraying device. Further, a difference in slurry concentration is unlikely to occur immediately after the supply of the slurry for thermal spraying and at the end of the supply. As a result, the thermal spray particles can be supplied to the spray apparatus with high efficiency and stability, and a high-quality thermal spray coating film can be formed.

[Method for Forming Coating Film]

(Base Material)

In the method for forming a thermal spray coating film disclosed herein, the base material on which the thermal spray coating film is to be formed is not particularly limited. For example, a base material made of various materials can be used as long as it is made of a material that has desired resistance when being subjected to such thermal spraying. Examples of such a material include various metals or alloys. Specific examples include aluminum, aluminum alloy, iron, steel, copper, copper alloy, nickel, nickel alloy, gold, silver, bismuth, manganese, zinc, zinc alloy, etc. Among them, more specific examples include base materials composed of steel represented by various SUS materials (which may be so-called stainless steel), heat-resistant alloys represented by Inconel, low-expansion alloys represented by Invar, Kovar, etc., corrosion-resistant alloys represented by Hastelloy, etc., aluminum alloys represented by 1000 series to 7000 series aluminum alloys, etc., which are useful as lightweight structural materials, etc. All these materials have a relatively large thermal expansion coefficient among general-purpose metal materials.

(Method for Forming Coating Film)

The slurry for thermal spraying disclosed herein can be used as a thermal spray material for forming a thermal spray coating film by using a thermal spraying device based on a known thermal spraying method. Typically, when such a slurry for thermal spraying is allowed to stand for a certain time or longer for the purpose of storage, etc., the thermal spray particles may start to settle and precipitate in the dispersion medium. Therefore, the slurry for thermal spraying in the art disclosed herein may be prepared so that the shear viscosity ratio becomes 5 or less, as described above, at the time of supply to thermal spraying (for example, in the preparation step for supplying to the thermal spraying device). For example, the slurry for thermal spraying (also referred to as a precursor solution) in a storage state before being supplied for thermal spraying may be prepared, for example, as a high-concentration slurry in which thermal spray particles are contained in a higher concentration.

For example, a thermal spraying method such as a plasma spraying method, a high-velocity flame spraying method, etc. can be suitably adopted as a thermal spraying method for suitably spraying this slurry for thermal spraying.

The plasma spraying method is a thermal spraying method that uses plasma flame as a spraying heat source for softening or melting the thermal spray material. When an arc is generated between electrodes and a working gas is turned into plasma by the arc, the plasma flow is ejected from the nozzle as a high-temperature and high-velocity plasma jet. The plasma spraying method is generally inclusive of a coating method in which a thermal spray material is charged into this plasma jet, heated and accelerated to be deposited on a substrate to obtain a thermal spray coating film. The plasma spraying method can be implemented as atmospheric plasma spraying (APS) performed in the atmosphere, low-pressure plasma spraying (LPS) in which thermal spraying is performed at a pressure lower than atmospheric pressure, high-pressure plasma spraying in which thermal spraying is performed in a pressure vessel at a pressure higher than atmospheric pressure, etc. According to such plasma spraying, for example, the thermal spray material is melted and accelerated by a plasma jet of about 5000°C to 10,000°C, so that the thermal spray particles collide with and can be deposited on the base material at a speed of about 300 m/s to 600 m/s.

As the high-velocity flame spraying method, for example, an oxygen-supported combustion type high-velocity flame (HVOF) spraying method, a warm-spray thermal spraying method, and an air-supported combustion type (HVAF) high-velocity flame spraying method can be considered.

The HVOF thermal spraying method is a type of flame spraying method in which a combustion flame obtained by mixing fuel and oxygen and burning under high pressure is used as a heat source for thermal spraying. By increasing the pressure in the combustion chamber, a high-velocity (possibly supersonic) high-temperature gas flow is ejected from a nozzle in the form of a continuous combustion flame. The HVOF thermal spraying method is generally inclusive of a coating method in which a thermal spray material is charged into this gas flow, heated and accelerated to be deposited on a substrate to obtain a thermal spray coating film. According to the HVOF thermal spraying method, for example, the slurry for thermal spraying is supplied to a jet of a supersonic combustion flame at 2000°C to 3000°C to remove the dispersion medium from the slurry (which may be by combustion or evaporation; the same applies hereinafter). In addition, the thermal spray particles can be softened or melted and collided with and deposited on the substrate at a high speed of 500 m/s to 1000 m/s. The fuel used in the high-velocity flame spraying may be a hydrocarbon gas fuel such as acetylene, ethylene, propane, propylene, etc. or a liquid fuel such as kerosene or ethanol. Further, the higher the melting point of the thermal spray material, the higher the preferred temperature of the supersonic combustion flame. From this viewpoint, it is preferable to use gas fuel.

Further, a thermal spraying method referred to as a so-called warm spray spraying method, which is an application of the above HVOF spraying method, can also be adopted. The warm spray spraying method is typically a method for forming a thermal spray coating film by performing thermal spraying in a state in which the temperature of the combustion flame is reduced, for example, by mixing a cooling gas composed of nitrogen, etc. having a temperature of about a room temperature with the combustion flame in the HVOF thermal spraying method. The thermal spray material is not limited to a completely melted state, and for example, a material in a partially melted state or a softened state below or at the melting point can be thermally sprayed. According to the warm-spray thermal spraying method, for example, the slurry for thermal spraying is supplied to a jet of a supersonic combustion flame at 1000°C to 2000°C to remove the dispersion medium from the slurry (which may be by combustion or evaporation; the same applies hereinafter). In addition, the thermal spray particles can be softened or melted and collided with and deposited on the substrate at a high speed of 500 m/s to 1000 m/s.

The HVAF thermal spraying method is a thermal spraying method in which air is used instead of oxygen as a combustion supporting gas in the HVOF thermal spraying method. In the HVAF spraying method, the spraying temperature can be lower than that of the HVOF spraying method. For example, the slurry for thermal spraying is supplied to a jet of a supersonic combustion flame at 1600°C to 2000°C to remove the dispersion medium from the slurry (which may be by combustion or evaporation; the same applies hereinafter). In addition, the thermal spray particles can be softened or melted and collided with and deposited on the substrate at a high speed of 500 m/s to 1000 m/s.

In the invention disclosed herein, where the slurry for thermal spraying is thermally sprayed by high-velocity flame spraying or plasma spraying, it is possible to sufficiently soften and melt the thermal spray material even when the slurry includes a thermal spray material having a relatively large particle size. Such thermal spraying is also preferable because even a slurry for thermal spraying having a high content of thermal spray particles can be thermally sprayed with good fluidity and a dense thermal spray coating film can be efficiently formed.

The supply of the slurry for thermal spraying to the thermal spraying device is not necessarily limited, but a flow velocity of 10 mL/min or more and 200 mL/min or less is preferable. It is preferable that the supply rate of the slurry for thermal spraying be set to about 10 mL/min or more, because it is possible to generate a turbulent state of the slurry flowing in the slurry supply device (for example, the slurry supply tube), the pushing force of the slurry is increased, and sedimentation of the thermal spray particles is suppressed. From this viewpoint, the flow velocity at the time of supplying the slurry for thermal spraying is preferably 20 mL/min or more, and more preferably 30 mL/min or more. Meanwhile, where the supply rate is too fast, the amount of slurry that can be sprayed by the spraying device may be exceedingly high, which is not preferable. From this viewpoint, the flow velocity at the time of supplying the slurry for thermal spraying is suitably 200 mL/min or less, preferably 150 mL/min or less, and more suitably, for example, 100 mL/min or less.

Further, it is preferable that the slurry for thermal spraying be supplied to the thermal spraying device by an axial supply method, that is, the slurry for thermal spraying be supplied in the same direction as the axis of the jet stream generated in the thermal spraying device. For example, it is preferable that the slurry-like slurry for thermal spraying of the present invention be supplied to the thermal spraying device by an axial supply method, because the thermal spray material in the slurry for thermal spraying is less likely to adhere to the inside of the thermal spraying device due to good fluidity of the slurry for thermal spraying and because a dense thermal spray coating film can be efficiently formed.

Furthermore, it is considered that when the slurry for thermal spraying is supplied to the thermal spraying device using a general feeder, stable supply becomes difficult because the supply amount fluctuates periodically. Where the supply amount of the slurry for thermal spraying becomes uneven due to the periodical fluctuations in the supply amount, it is difficult to uniformly heat the thermal spray material in the thermal spraying device, and an uneven thermal spray coating film may be formed. Therefore, in order to stably supply the slurry for thermal spraying to the thermal spraying device, a two-stroke system, that is, two feeders, may be used so that the fluctuation periods of the amounts of slurry for thermal spraying supplied from both feeders are in opposite phases. Specifically, for example, the supply method may be adjusted to a periodic mode such that when the supply amount from one feeder increases, the supply amount from the other feeder decreases. When the slurry for thermal spraying of the present invention is supplied to the thermal spraying device by a two-stroke system, the fluidity of the slurry for thermal spraying is satisfactory, so that a dense thermal spray coating film can be efficiently formed.

As a means for stably supplying the slurry-like thermal spray material to the thermal spraying device, the slurry sent out from the feeder may be temporarily stored in a storage tank provided immediately before the thermal spraying device, and supplied to the thermal spraying device by using spontaneous fall from the storage tank, or the slurry in the tank may be forcibly supplied to the thermal spraying device by means of a pump or the like. Forcible supply by means of a pump, etc. is preferable because even if the tank and the thermal spraying device are connected by a tube, the thermal spray material in the slurry is less likely to adhere within the tube. A means for stirring the slurry for thermal spraying in the tank may be provided in order to realize a uniform distribution state of the components in the slurry for thermal spraying in the tank.

The supply of the slurry for thermal spraying to the thermal spraying device is preferably performed through, for example, a metal conductive tube. When a conductive tube is used, the generation of static electricity is suppressed, so that the supply amount of the slurry for thermal spraying is less likely to change. The inner surface of the conductive tube preferably has a surface roughness Ra of 0.2 $\mu$m or less.

The thermal spraying distance is preferably set so that the distance from the nozzle tip of the thermal spraying device to the substrate is 30 mm or more. It is not preferable that the thermal spraying distance be too short, because sufficient time for removing the dispersion medium contained in the slurry for thermal spraying or for softening/melting the thermal spray particles cannot be ensured, or the thermal spraying heat source is close to the base material, thereby creating a risk of altering or deforming the base material.

The spraying distance is preferably about 200 mm or less (preferably 150 mm or less, for example, 100 mm or less). With such a distance, the thermal spray particles that have been sufficiently heated can reach the base material while maintaining the temperature, and thus a denser thermal spray coating film can be obtained.

When spraying, it is preferable to cool the base material from the surface opposite to the surface to be thermally sprayed. Such cooling can be water cooling or cooling with an appropriate refrigerant.

(Thermal Spray Coating Film)

With the art disclosed herein, a thermal spray coating film composed of a compound having the same composition as that of the thermal spray particles and/or a decomposition product thereof is formed.

As described above, the thermal spray coating film is formed by using a slurry for thermal spraying having a shear viscosity ratio of 5 or less and a good dispersion state of thermal spray particles. Therefore, the thermal spray particles maintain suitable dispersion state and flow state in the slurry for thermal spraying, and are stably supplied to the thermal spraying device to form a uniform thermal spray coating film. In addition, the thermal spray particles can be efficiently supplied to the vicinity of the center of the heat source without being repelled by the flame or the jet, and can be sufficiently softened or melted. Therefore, the softened or melted thermal spray particles adhere to the base material and between the particles in a dense and adherent manner. As a result, a thermal spray coating film having good homogeneity and adhesion is formed at a suitable coating film formation rate.

Hereinafter, the present invention will be disclosed more specifically based on Examples, but the present invention is not intended to be limited to these Examples.

[Preparation of Slurry for Thermal Spraying]

(Example 1)

As the thermal spray particles, yttria-stabilized zirconia powder (YSZ, manufactured by Imerys Minerals, $D_{50}$ particle diameter: 0.6 $\mu$m, $D_{97}$ particle diameter: 2 $\mu$m) produced by a commercially available melt pulverization method was prepared. The particle diameter of the thermal spray particles is such that Brownian motion is not observed in the slurry. As a dispersion medium, a mixed solvent was prepared by mixing 69 parts by mass of ethanol, 5 parts by mass of distilled water, and 1 part by mass of methyl ethyl ketone (MEK). In addition, as a dispersant, a dispersant A (manufactured by Toho Chemical Industry Co., Ltd., nonionic dispersant, Hisolve MTM) was prepared. Since this dispersant had a high solubility in MEK, the dispersion medium included 1 part by mass of MEK according to the dispersant recipe. Then, 25 parts by mass of thermal spray particles as a dispersoid, 75 parts by mass of a dispersion medium, and 0.5 parts by mass of a dispersant were uniformly mixed to prepare a slurry for thermal spraying of Example 1. The amount of the dispersant added was proportioned to obtain 2% by mass with respect to the thermal spray particles. No pretreatment was applied to the thermal spray particles.

(Example 2)

A slurry for thermal spraying of Example 2 was prepared in the same manner as in Example 1 except that the addition amount of the dispersant in Example 1 was increased to 2 parts by mass (8% by mass with respect to the thermal spray particles).

(Example 3)

A slurry for thermal spraying of Example 3 was prepared in the same manner as in Example 1 except that a dispersant B (manufactured by Toho Chemical Industry Co., Ltd., nonionic dispersant, Hisolve MTEM) was used in place of the dispersant A in Example 1.

(Example 4)

A slurry for thermal spraying of Example 4 was prepared in the same manner as in Example 3 except that the amount of the dispersant added in Example 3 was increased to 2 parts by mass (8% by mass with respect to the thermal spray particles).

(Example 5)

A slurry for thermal spraying of Example 5 was prepared in the same manner as in Example 4 except that surface modification treatment for introducing a hydroxy group was performed on the thermal spray particles of Example 4.

(Example 6)

A slurry for thermal spraying of Example 6 was prepared in the same manner as in Example 5 except that the dispersant in Example 5 was not added.

(Example 7)

A slurry for thermal spraying of Example 7 was prepared in the same manner as in Example 5 except that the dispersant in Example 5 was not added and distilled water was used instead of ethanol.

(Example 8)

A slurry for thermal spraying of Example 8 was prepared in the same manner as in Example 4 except that ethanol was used instead of distilled water in Example 4.

(Example 9)

A slurry for thermal spraying of Example 9 was prepared in the same manner as in Example 4 except that the proportion of distilled water in Example 4 was increased to 12 parts by mass and the proportion of ethanol was reduced to 63 parts by mass.

[Shear Viscosity Measurement and Viscosity Ratio]

The viscosity of the slurry for thermal spraying of each example was measured according to JIS Z 8803:2011 by changing the rotation speed of the rotor in the range of 10/s to 1000/s as shown in Table 1 below. For the viscosity measurement, a rheometer (MCR302, manufactured by Anton Paar) was used, and the measurement was performed at room temperature (25°C) by using a cone plate (CP50-1, cone diameter 50 mm, cone angle 1°). The results are shown in the "Shear viscosity" column of Table 1 and Fig. 1.
Further, the ratio of the viscosity at the rotation speed of the rotor of 1000/s to the viscosity at the rotation speed of 10/s was calculated and shown in the "Viscosity ratio 1000/10" column in Table 1.

[Surface Tension]

Further, the surface tensions of the slurries for thermal spraying of Examples 1 to 4, 7, and 8 were measured based on a Wilhelmy method. Specifically, a measurement plate was brought into contact with the surface of the slurry for thermal spraying of each example so that the plane was perpendicular to the liquid surface. At this time, the contact angle of the slurry with respect to the measurement plate when the liquid surface of the slurry for thermal spraying wets up along the circumference of the measurement plate due to surface tension, and the force with which the slurry tries to draw the plate into the liquid were measured and the surface tension was calculated. The results are shown in the "Surface tension" column of Table 1.

[Sedimentation Test]

A sedimentation test was conducted on the slurries for thermal spraying of Examples 4 to 7. Specifically, 50 mL of the slurry for thermal spraying of each example was placed in a colorimetric tube having a volume of 100 mL, stoppered, shaken sufficiently so that the slurry became a uniform suspension, and then allowed to stand on a horizontal surface. Then, the height of the interface between the suspension and the precipitated particles (solid-liquid interface) was measured after 3 minutes from standing, and a sedimentation degree was calculated by the following formula: sedimentation degree (%) = [(slurry surface height) - (interface height after sedimentation)]/(slurry surface height) $\times$ 100. The results are shown in the "Sedimentation degree" column in Table 1. The interface height was determined by a visual colorimetric method. For reference, Fig. 2 shows the states of the slurries immediately after the tests of (a) Example 4 and (b) Example 7. In both (a) Example 4 and (b) Example 7, the surface of the slurry was located at the 50 mL line of the colorimetric tube, and the interface of the slurry of Example 4 could be confirmed at the position of 40 mL.

It is clear that no interface could be confirmed for Example 7.

[Suppliability Index]

Further, for the slurries for thermal spraying of Examples 4 to 7, the suppliability index was measured by the following procedure. That is, first, a polyurethane tube with an inner diameter of 5 mm and a length of 5 m (manufactured by Chiyoda Corporation, touch tube (urethane), TE-8, outer diameter 8 mm × inner diameter 5 mm) was placed horizontally on a test bench without height difference. Then, a roller pump for supplying slurry was attached to one end of the tube, and a slurry recovery container was installed at the other end. Then, after it was confirmed that the thermal spray particles were in a good dispersed state by stirring with a magnetic stirrer, the prepared 800 mL of the slurry for thermal spraying was supplied into the tube at a flow velocity of 35 mL/min. Then, the slurry for thermal spraying that passed through the tube was recovered in a recovery container, and the mass B of the thermal spray particles contained in the recovered slurry was measured. Then, from the mass A of the thermal spray particles contained in 800 mL of the prepared slurry for thermal spraying that was calculated in advance and the mass B of the thermal spray particles contained in the recovered slurry, the suppliability index was calculated by the following formula: suppliability index (%) = B/A × 100. The results are shown in the "Suppliability index" column in Table 1.

[Table 1]

| Table 1 | | | | | | | | | | |
|---|---|---|---|---|---|---|---|---|---|---|
| Example | | 1 | 2 | 3 | 4 | 5 | 6 | 7 | 8 | 9 |
| Slurry composition [parts by mass] | YSZ (OH introduction) | 25 No | 25 No | 25 No | 25 No | 25 Yes | 25 Yes | 25 Yes | 25 No | 25 No |
| | Ethanol | 69 | 69 | 69 | 69 | 69 | 69 | 0 | 74 | 63 |
| | Water | 5 | 5 | 5 | 5 | 5 | 5 | 74 | 0 | 12 |
| | MEK | 1 | 1 | 1 | 1 | 1 | 1 | 0 | 1 | 1 |
| | Dispersant A | 0.5 | 2 | - | - | - | - | - | - | - |
| | Dispersant B | - | - | 0.5 | 2 | 2 | - | - | 2 | 2 |
| Total | | 100.5 | 102 | 100.5 | 102 | 102 | 100 | 99 | 102 | 102 |
| Shear viscosity [$\times 10^{-3}$, Pa·s] | | | | | | | | | | |
| Rotation speed [1/s] | 1000 | 3.08 | 4.18 | 3.99 | 3.67 | 1.69 | 1.85 | 1.26 | 3.67 | 5.56 |
| | 929 | 3.12 | 4.29 | 4.15 | 3.78 | 1.65 | 1.82 | 1.23 | 3.76 | 5.68 |
| | 858 | 3.18 | 4.44 | 4.25 | 3.88 | 1.66 | 1.85 | 1.25 | 3.87 | 5.86 |
| | 788 3.32 | 3.32 | 4.56 | 4.42 | 3.92 | 1.71 | 1.81 | 1.20 | 3.91 | 6.06 |
| | 717 | 3.38 | 4.70 | 4.54 | 4.06 | 1.69 | 1.82 | 1.22 | 4.03 | 6.25 |
| | 646 | 3.47 | 4.90 | 4.68 | 4.22 | 1.69 | 1.84 | 1.24 | 4.18 | 6.50 |
| | 576 | 3.58 | 5.05 | 4.91 | 4.37 | 1.65 | 1.81 | 1.21 | 4.31 | 6.73 |
| | | 3.73 | 5.31 | 5.12 | 4.59 | 1.65 | 1.83 | 1.23 | 4.52 | 7.08 |
| | | 3.97 | 5.62 | 5.43 | 4.80 | 1.72 | 1.82 | 1.22 | 4.73 | 7.56 |
| | 363 | 4.20 | 6.00 | 5.82 | 5.13 | 1.70 | 1.82 | 1.24 | 5.05 | 8.09 |
| | 293 | 4.52 | 6.52 | 6.32 | 5.60 | 1.68 | 1.83 | 1.27 | 5.50 | 8.83 |
| | 222 | 5.06 | 7.22 | 7.15 | 6.21 | 1.70 | 1.78 | 1.27 | 6.10 | 9.94 |
| | | 5.91 | 8.46 | 8.45 | 7.34 | 1.69 | 1.80 | 1.27 | 7.25 | 11.9 |
| | 81 | 7.91 | 11.3 | 11.4 | 10.0 | 1.71 | 1.86 | 1.44 | 10.0 | 16.5 |
| | 10 23.9 | 23.9 | 27.3 | 32.1 | 31.6 | 1.79 | 2.06 | 2.95 | 35.5 | 58.1 |

(continued)

| Shear viscosity [$\times 10^{-3}$, Pa·s] | | | | | | | | | | |
|---|---|---|---|---|---|---|---|---|---|---|
| Viscosity ratio | 10/1000 [-] | 7.76 | 6.53 | 8.05 | 8.61 | 1.06 | 1.11 | 2.34 | 9.67 | 10.45 |
| Surface tension [mN/m] | | 24.0 | 25.1 | 25.3 | 25.0 | 24.0 | - | - | 24.7 | - |
| Sedimentation degree [3 min, %] | | - | - | - | 20.0 | 0 | 0 | 0 | - | - |
| Suppliability index [%] | | - | - | - | 0 | 93 | 90 | 85 | - | - |

[Evaluation]

As shown in Table 1 and Fig. 1, it could be confirmed that the slurries for thermal spraying of the respective examples had large differences in viscosity characteristics although the particles for thermal spraying had almost the same composition, particle size, and solid fraction concentration.

Specifically, for example, it was found that the slurries for thermal spraying of Examples 5, 6, and 7 demonstrated an almost Newtonian viscosity characteristic, and the shear viscosity thereof hardly changed in the rotation speed range of about 150/s to 1000/s and slightly increased when the rotation speed was reduced to about 80/s and 10/s. Meanwhile, it was found that the other slurries for thermal spraying had lower shear viscosities as the rotation speed increased in the range of 10/s to 1000/s, and exhibited non-Newtonian viscosity characteristics.

As a result, it was found that the viscosity ratios for the slurries for thermal spraying of Examples 5, 6, and 7 were all significantly lower than 5% (for example, in the range of about 2.5% or less), whereas for the other slurries, high values of more than about 6.5% were obtained.

Here, it was found that, for example, the slurry for thermal spraying of Example 4 had a sedimentation degree of about 13%, whereas the slurries for thermal spraying of Examples 5, 6 and 7 all had a sedimentation degree of 0%, and the thermal spray particles were unlikely to settle and excellent dispersion stability was achieved even when the slurries were stored in a stationary state. Generally, particles with a $D_{97}$ particle diameter of a 2 μm level tend to settle easily in a slurry, as shown in, for example, Example 4. However, for example, although the slurry of Example 5 was different from the slurry of Example 4 only in that the surface treatment was applied to the thermal spray particles, the sedimentation degree was significantly different. From this, it is understood that the surface treatment of the thermal spray particles significantly reduces the shear viscosity in the entire rotation speed region, and the thermal spray particles are dispersed (for example, float) in the dispersion medium without resistance.

Furthermore, it was found that the suppliability index of the slurry for thermal spraying of Example 4 was 0%, and although an attempt was made to cause the slurry to flow in a thin tube having an inner diameter of 5 mm, the thermal spray particles in the slurry easily adhered to or settled on the tube wall and it was almost impossible to transfer the slurry 5 m ahead. The slurry for thermal spraying of Example 4 had a sedimentation degree of about 13% as described above, and it seemed that the sedimentation of particles in the slurry was not that prominent. Further, it was understood that the surface tension of the slurry for thermal spraying of Example 4 was higher than that of, for example, the slurry of Example 5, and the inner wall of the tube was not easily wetted. However, it was found that in the slurry for thermal spraying of Example 4, since the thermal spray particles were not surface-treated, the particles were likely to aggregate or settle in a fluidized state and dispersion stability reduced.

By contrast, it was found that the slurries for thermal spraying of Examples 5, 6 and 7 showed a high suppliability index of over 80%, the thermal spray particles were unlikely to settle even in a fluidized state and excellent dispersion stability was demonstrated. It can be understood that in the slurries of Examples 5, 6 and 7, since the thermal spray particles were subjected to surface treatment, even though the thermal spray particles rubbed against the tube wall or other thermal spray particles during flowing, adhesion and aggregation were suppressed.

Although not specifically shown, the present inventors have investigated the FT-IR spectrum, zeta potential, TG-DTA profile, etc. of the slurries for thermal spraying and the particles for thermal spraying of Examples 1 to 9. However, no significant differences were found for these properties between Examples 1 to 9. Therefore, for example, it was found that the above viscosity ratio can be an index clearly showing the excellent dispersion stability of the slurry for thermal spraying disclosed herein.

Further, as shown in Examples 6 and 7, it was found that the slurries including the surface-treated thermal spray particles had good dispersion stability and could maintain a low viscosity without containing a dispersant itself. Also, from the comparison of Examples 1 to 4, it was found that high dispersion stability such as that of the slurries for thermal spraying of Examples 5 to 7 disclosed herein could not be realized by adjusting the type and addition amount of the dispersant. However, comparing the viscosity ratios and the suppliability indexes of Examples 5 to 7, the slurry for thermal spraying of Example 5 including the dispersant had the lowest viscosity ratio and the highest suppliability index. From this, it was found that the dispersion stability can be further enhanced by combining the surface treatment

14

of the thermal spray particles and the blending of the dispersant. From the comparison of Examples 6 and 7, it can be said that the dispersion medium is preferably composed mainly of a lower alcohol such as ethanol, rather than a dispersion medium containing 100% water.

The specific examples of the present invention have been described above in detail, but these are merely examples and do not limit the scope of the claims. The art set forth in the claims is inclusive of various modifications and changes of the specific examples illustrated above. For example, in the above-described embodiment, in order to sufficiently reduce the dispersion stability of the thermal spray particles of the comparative example, a slurry having a solid fraction concentration of about 25% by mass was prepared using thermal spray particles of YSZ having a $D_{97}$ level of 2 $\mu$m. However, it is clear that in the art disclosed herein, the dispersion stability of the thermal spray particles in the slurry was improved by the surface treatment of the thermal spray particles, and the composition and particle diameter of the thermal spray particles are naturally not limited in the above examples. It can be understood that slurries for thermal spraying having variously modified structures can be prepared by a person skilled in the art on the basis of the teachings disclosed herein and common technical knowledge at the time of filing.

**Claims**

1. A slurry for thermal spraying, comprising:

   thermal spray particles made of an inorganic material; and
   a dispersion medium, wherein
   a ratio of a shear viscosity of the slurry at a rotation speed of 10/s to a shear viscosity of the slurry at a rotation speed of 1000/s is 5 or less.

2. The slurry for thermal spraying according to claim 1, further comprising a dispersant.

3. The slurry for thermal spraying according to claim 1 or 2, wherein the shear viscosity of the slurry for thermal spraying at a rotation speed of 10/s is 15 mPa·s or less.

4. The slurry for thermal spraying according to any one of claims 1 to 3, wherein the dispersion medium includes at least a lower alcohol having 5 or fewer carbon atoms.

5. The slurry for thermal spraying according to any one of claims 1 to 4, wherein a sedimentation degree of the slurry for thermal spraying in 3 minutes is 5% or less.

6. The slurry for thermal spraying according to any one of claims 1 to 5, wherein
   where a mass of the thermal spray particles contained in 800 mL of the slurry for thermal spraying is denoted by A (kg), and
   a mass of the thermal spray particles contained in a recovered slurry which is obtained by supplying 800 mL of the slurry for thermal spraying in which the thermal spray particles are in a dispersed state at a flow velocity of 35 mL/min into a horizontally arranged tube having an inner diameter of 5 mm and a length of 5 m, and recovering the slurry, is denoted by B (kg),
   a suppliability index, which is calculated by a following formula: suppliability index (%) = B/A $\times$ 100, is 70% or more.

FIG.1

(a)      (b)

FIG.2

## INTERNATIONAL SEARCH REPORT

<table>
<tr><td></td><td>International application No.<br>PCT/JP2019/012040</td></tr>
</table>

A. CLASSIFICATION OF SUBJECT MATTER
Int. Cl. C23C4/10(2016.01)i, C23C4/129(2016.01)i, C23C4/134(2016.01)i

According to International Patent Classification (IPC) or to both national classification and IPC

B. FIELDS SEARCHED

Minimum documentation searched (classification system followed by classification symbols)
Int. Cl. C23C4/10, C23C4/129, C23C4/134

Documentation searched other than minimum documentation to the extent that such documents are included in the fields searched
```
Published examined utility model applications of Japan    1922-1996
Published unexamined utility model applications of Japan  1971-2019
Registered utility model specifications of Japan          1996-2019
Published registered utility model applications of Japan  1994-2019
```

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | US 2008/0090071 A1 (COMMISSARIAT A L'ENERGIE | 1-6 |
| Y | ATOMIQUE) 17 April 2008, claims 1, 2, 11, 12, 13, 14, 15, paragraphs [0009], [0024], [0025], [0029], [0032], [0061]-[0066], [0070], [0071] & EP 1802783 A1 & JP 2008-517159 A | 1-6 |
| Y | JP 2017-061735 A (FUJIMI INC.) 30 March 2017, claims 1, 2, paragraphs [0005], [0088]-[0099], table 1 & US 2017/0088928 A1, paragraphs [0009], [0133]-[0152], table 1 & KR 10-2017-0037514 A | 1-6 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>07.05.2019 | Date of mailing of the international search report<br>21.05.2019 |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**INTERNATIONAL SEARCH REPORT**

| International application No. |
|---|
| PCT/JP2019/012040 |

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2014/142019 A1 (FUJIMI INC.) 18 September 2014, paragraphs [0006], [0019]-[0021], [0039]-[0045], table 1 & US 2016/0016856 A1, paragraphs [0007], [0020]-[0022], [0039]-[0045], table 1 & KR 10-2015-0128843 A | 1-6 |
| Y | US 2005/0196271 A1 (SULZER METCO (US), INC.) 08 September 2005, paragraphs [0001], [0004], [0010]-[0012], [0015], [0017]-[0025], [0030], [0032], fig. 2 & EP 1548144 A1 & JP 2005-179779 A | 1-6 |

Form PCT/ISA/210 (continuation of second sheet) (January 2015)

**EP 3 778 981 A1**

## REFERENCES CITED IN THE DESCRIPTION

**Patent documents cited in the description**

- JP 2018068685 A
- WO 2014142017 A